# EUROPEAN PATENT SPECIFICATION

(11) **EP 1 278 650 B1**
(45) Date of publication and mention of the grant of the patent: **08.10.2003**
(21) Application number: 01925871.4
(22) Date of filing: 10.04.2001
(51) Int. Cl.: B60K 41/22, F16H 61/32, F16D 23/12, F16H 63/18, F16H 21/36

(54) **ELECTRIC ACTUATORS FOR CLUTCH AND/OR SEQUENTIAL GEARBOX OPERATION IN MOTOR VEHICLES**
ELEKTRISCHE AKTUATOREN FÜR BETÄTIGUNG VON KUPPLUNG UND/ODER SEQUENTIELLES SCHALTGETRIEBE IN KRAFTFAHRZEUGEN
ACTIONNEURS ELECTRIQUES SERVANT AU FONCTIONNEMENT DE L'EMBRAYAGE ET/OU DE LA BOITE DE VITESSES SEQUENTIELLE DE VEHICULES AUTOMOBILES

(30) Priority: 11.04.2000 IT MO000072
(43) Date of publication of application: 29.01.2003
(73) Proprietor: Automac Engineering S.r.l., 41016 Novi di Modena (IT)
(72) Inventor: BIGI, Maurizio, I-41016 Novi di Modena (IT)
(74) Representative: Spera, Maria Caterina
(86) International application number: IT0100179
(87) International publication number: WO01076905

(56) References cited:
- EP-A- 0 527 389
- BE-A- 651 094
- DE-A- 19 823 767
- GB-A- 2 313 885
- US-A- 5 967 939

## Description

The invention concerns: electric actuators for controlling the clutch and/or the sequential gearbox in motor vehicles, in which the release of the friction clutch occurs by means of the action of a device equipped with a template; similarly, the actuation of the sequential gearbox is achieved by means of a template of a different actuator, the two actuators possibly being coupled for the simultaneous control of the said clutch and sequential gearbox.

Prior art already comprises actuator devices for sequential gearboxes consisting of hydraulic cylinders in which the pressure acting in the said cylinders selects, in sequence, the higher or lower gear.
The said actuators consist of two single acting cylinders, whose pistons are connected to each other on the same stem on the opposite side of the pressure chamber. A drain connection is positioned in the middle between the cylinders and the pistons when in their neutral position; the pressure chambers are controlled by three-way control valves which connect each chamber, alternatively to the high pressure line, for actuation, or the discharge line to end actuation on that side; the central position of the stem with two pistons is obtained by means of two cups with collars on the pressure chamber side, which when subjected to pressure in both chambers define a fixed central position, by means of the collars and appropriate stroke limiters.
Prior art also comprises mechanical actuators for clutch control in motorcycles, in which the mechanical control acts on a lever which, by means of a rack-and-pinion transmission, moves the clutch plate; the return stroke is ensured by the springs of the clutch plate. A manual hydraulic control is also used consisting of a single acting hydraulic cylinder acting on the control rod of the clutch plate, fed by a small pump connected to the manual control lever operated by the user.
The need for both manual and automatic operation is felt particularly when the gearbox is operated remotely. In fact, in the case of motorcycles, the dual operating mode, both of the gearbox but more importantly of the clutch is seen as a significant safety feature.
With remote control operation the command which carries out the sequential gearbox, to operate correctly also has to operate the clutch, that is, the said lever with pinion and rod with rack, or the manual hydraulic control, with single acting cylinder, have to be remote controlled; because of the way they are configured they do not enable indifferently automatic or manual operation, that is with remote control.
Also, in the field of motor vehicles, prior art comprises an actuator to operate the clutch consisting of an electric motor which by means of a pinion coupled to a portion of crown gear turns a lever which acts by means of a rod on the clutch; the said lever is connected to a spring which compensates the opening force of the clutch. Moreover, such an actuator needing to invert the sense of rotation of the electrical motor during the operating cycle of the clutch, does not enable the sense of rotation of the said lever to be made not predetermined, as it has an obligatory direction. Furthermore, the inversion of the sense of rotation is a limiting factor for the speed of operation of the actuator.
Also for the gearbox there are electric motors, possibly with speed reducing mechanisms, that control the gear shift drum directly or actuate the gear lever in sequential gearboxes.
Also, the high powers of modern motorcycle engines require a considerable force to be exerted by the rider to operate the clutch. BE 651094 A discloses the features of the preamble of claim 1.

Such prior art may be subject to considerable improvement with a view to the possibility of making actuators for clutches and sequential gearbox with a low cost and simple operation.

From the foregoing emerges the need to resolve the technical problem of inventing a configuration of the actuator controlling the clutch and/or the sequential gearbox which is simple to construct and which is reliable, the two actuators possibly being coupled in construction and operation.

The invention resolves the said technical problem by adopting: an electric actuator for controlling the clutch and/or the sequential gearbox in motor vehicles, comprising an electric motor and a mechanism for transforming the rotary motion into linear motion of the actuator element, characterised in that, it comprises a crank mechanism or at least one cam, made to perform a complete rotation returning to the starting position, be it the clutch control, the gear change control, or both.
Adopting, in a preferred embodiment: constituting the said cam, as the mechanism for transforming the rotary motion into linear motion, a template, fashioned in a plate sliding on a corresponding guide, in which is positioned a crank stud made to rotate by the said electric motor.
Adopting in a second preferred embodiment: the said template being shaped in accordance with the application to optimise the forces.
Adopting, in a further preferred embodiment, in the case of the clutch actuator: the plate with the template having a spring to compensate the forces generated by the internal springs of the clutch.
Adopting, in a further preferred embodiment: the actuator element consisting of a hydraulic pump connected to the plate containing the said template.
Adopting, in a further preferred embodiment of the clutch actuator: the actuator element consisting of a metallic cable connected to the said plate containing the said template.
Adopting, in a further preferred embodiment of the sequential gearbox actuator: the template consisting of two profiles which are each parallel and tangential to the circumference traced by the stud, and of two profiles which are coaxial and tangential to the said circumference in a direction parallel to that of the guide and perpendicular to the said parallel profiles.
Adopting also, in a further preferred embodiment of the gearbox actuator: the actuator element connected to the plate containing the template in an elastic manner so as to allow over-run of the control stroke.
Adopting also, in a further preferred embodiment of the gearbox actuator: a mechanical disconnecting mechanism, with pre-loaded elastic element, positioned between the said electric actuator and the control pin of the sequential gearbox; the said disconnecting mechanism having an operating direction which may be either axial or rotational.
Further adopting, in another form of embodiment for the gearbox actuator: the gearbox rod centred mechanically on the guide of the actuator by means of counter-acting springs.
Adopting, in a further form of embodiment of the gearbox actuator: a sensor for detecting the neutral position of the template of the actuator.
Further adopting, in another form of embodiment: a position sensor on the rotating element of the mechanism for transforming the rotary motion into linear motion.
Also adopting, in a further embodiment: the crank having a sphere engaging in a notch to determine the neutral position.
Adopting, furthermore, in another form of embodiment of the clutch actuator: a sensor to measure the closing force of the said clutch; the said sensor possibly consisting of a load cell rigidly connected to the actuator rod of the clutch or of a sensor that measures the pressure of the hydraulic fluid when the clutch is actuated hydraulically.
Adopting, finally, in a further preferred embodiment of the clutch actuator: a rigid unidirectional connection between the sliding plate with the template and the rigid actuator rod of the clutch; furthermore it has a tooth to block the said rod or extremity, to position it against the shoulder or in the groove made in it: the said tooth is actuated in insertion by means of an electromagnet with neutral position normally disengaged.

The advantages obtained with this invention are: operating the control of the friction clutch by means of the template is economical and correct operation is ensured, and it is versatile in terms of where it is positioned in the vehicle; the crank stud is offloaded of the residual tension or thrust generated by operating the clutch due to the presence of the compensating springs; furthermore, the force generated by the electric motor is reduced and optimised by the geometry of displacement of the template; importantly, also, both the hydraulic actuator and that operated by the metal cable are extremely economical.
Furthermore, the sequential gearbox actuator is of very simple construction and does not have any of the complications of the prior art hydraulic actuators; the said actuator may be easily and economically manufactured and proper operation is assured. Furthermore, the template actuator for operating the sequential gearbox is highly versatile, as it may be indifferently power assisted or manually operated and it may be coupled to clutch operating actuator, to operate the clutch in a suitably synchronised manner, thereby ensuring proper operation of both controls. Furthermore, when the gearbox actuator is coupled to the clutch actuator, and rotates with it, it is still possible to control the clutch, to allow the degree of slippage necessary for the dynamic requirements of the vehicle, even with the automatic control, that is, managed by the vehicle control logic, as well as, naturally, with the manual intervention of the driver, without having to operate the gear lever. Also, both the actuator for only the clutch and the two actuators for clutch and gearbox may be fitted to the vehicle after it is manufactured, thereby implementing an advantageous improvement to the said vehicle; finally the assembly may be carried out by the user because the said actuator or actuators are easy and economical to install.
Finally, with the use of the locking tooth with electromagnetic control of the lever in the clutch actuator, it is possible to keep the clutch of the vehicle disengaged even in situations where multiple gear changes are required, generally when changing down, in a short space of time and without the need to engage the clutch with each change of gear. In this case a further advantage is the possibility of stopping the vehicle with a gear selected and to select any gear without the vehicle moving with engine on.

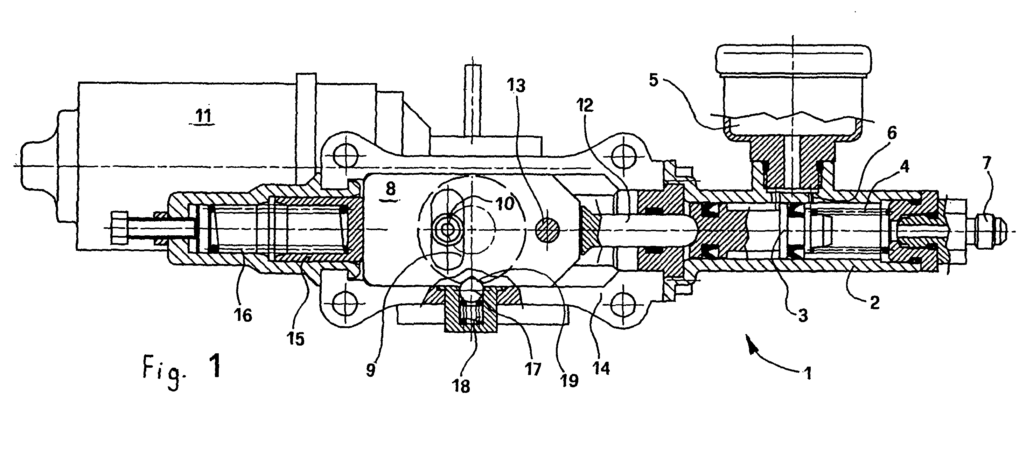

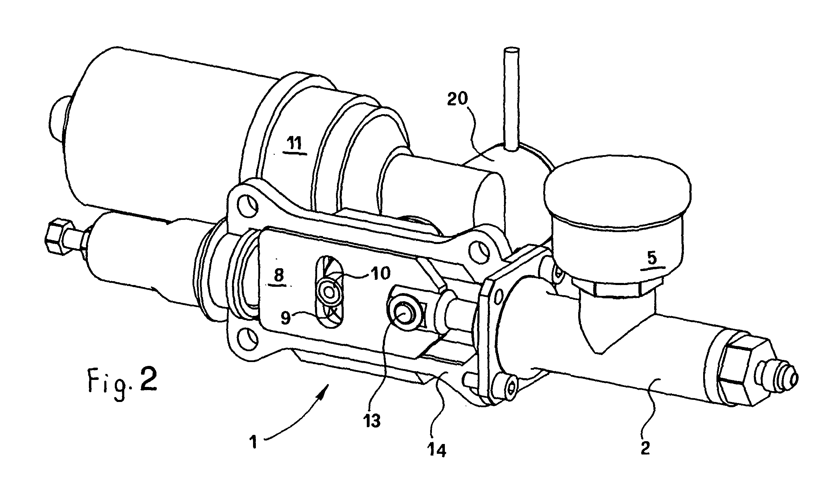

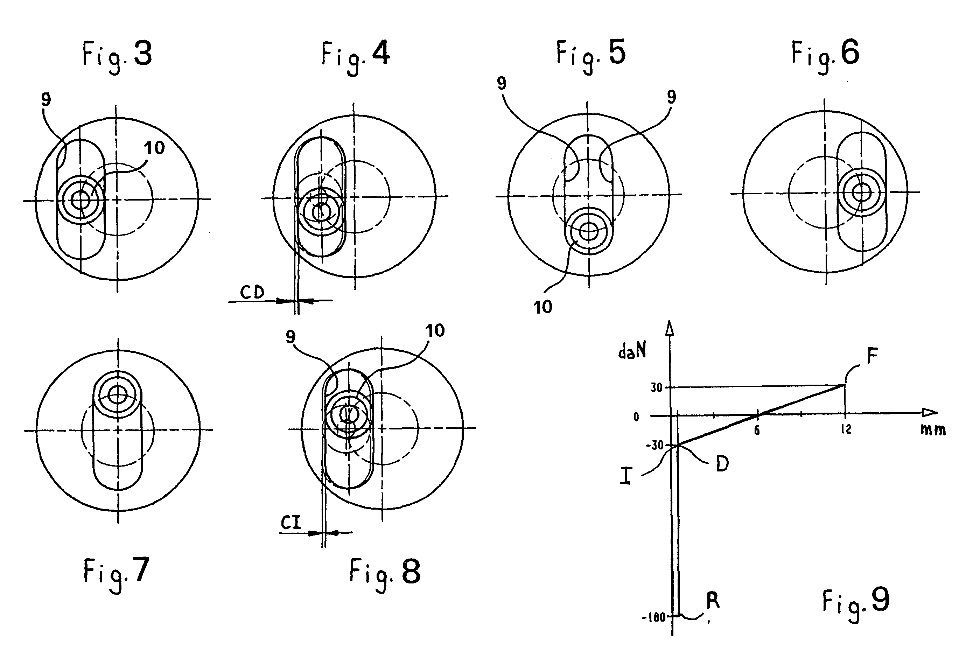

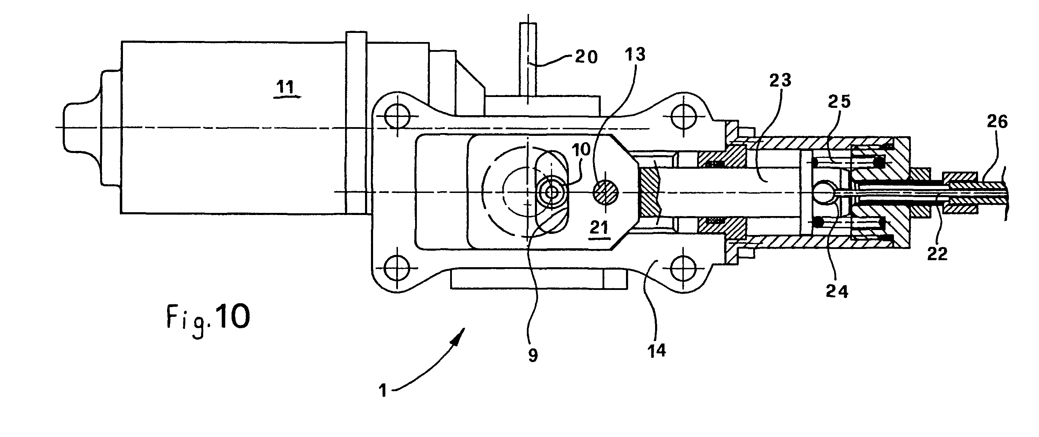

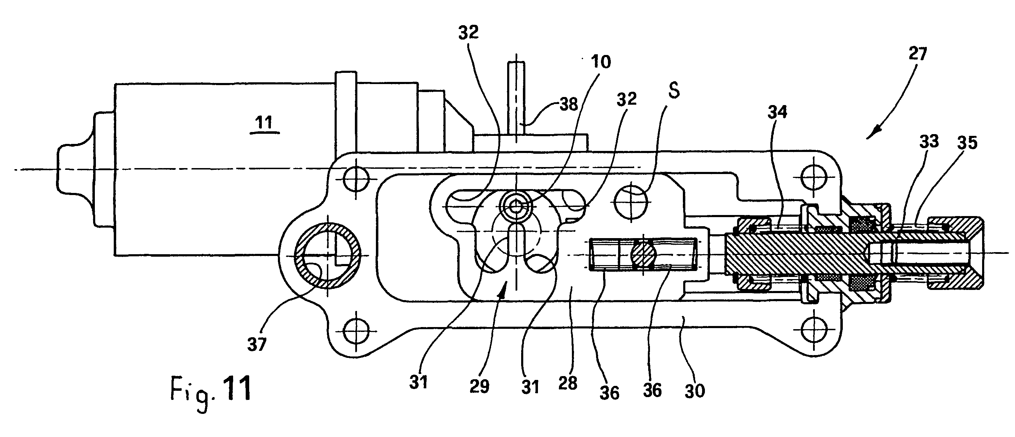

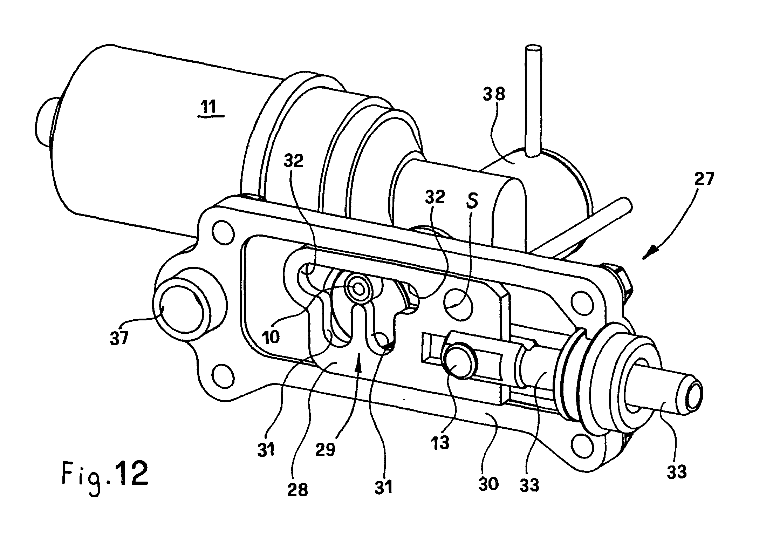

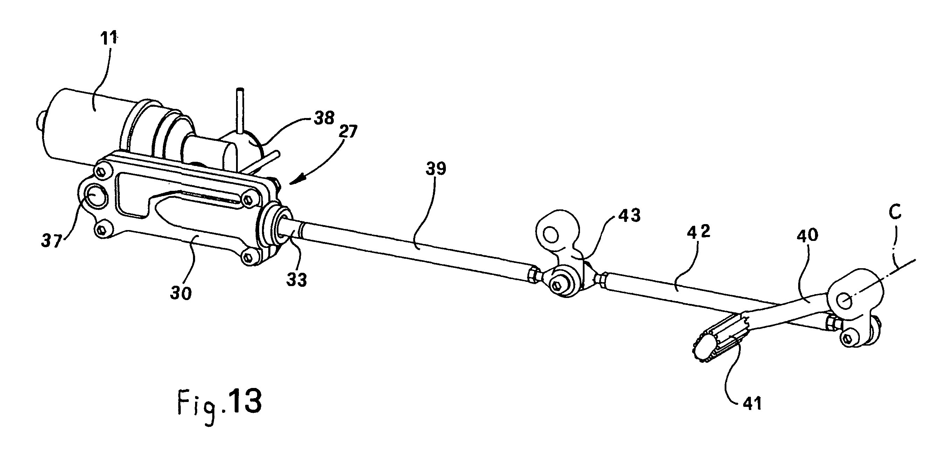

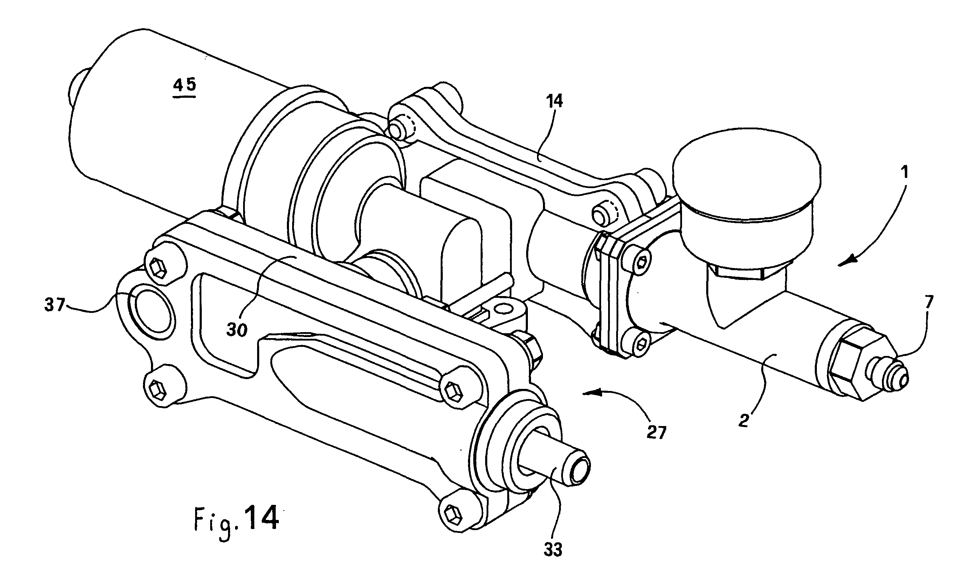

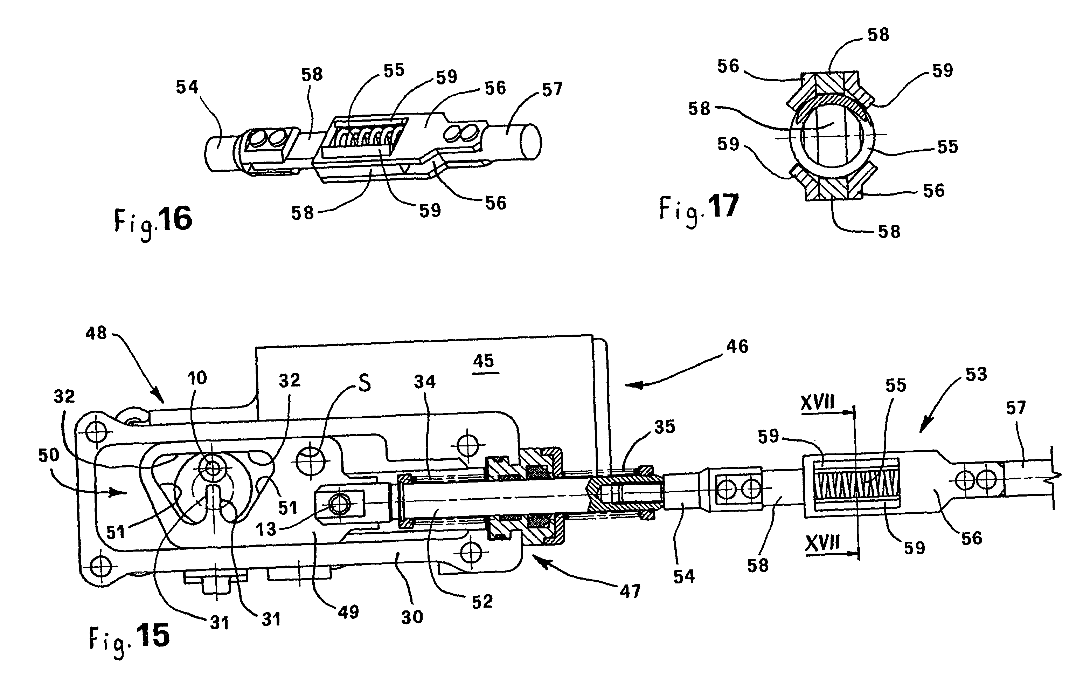

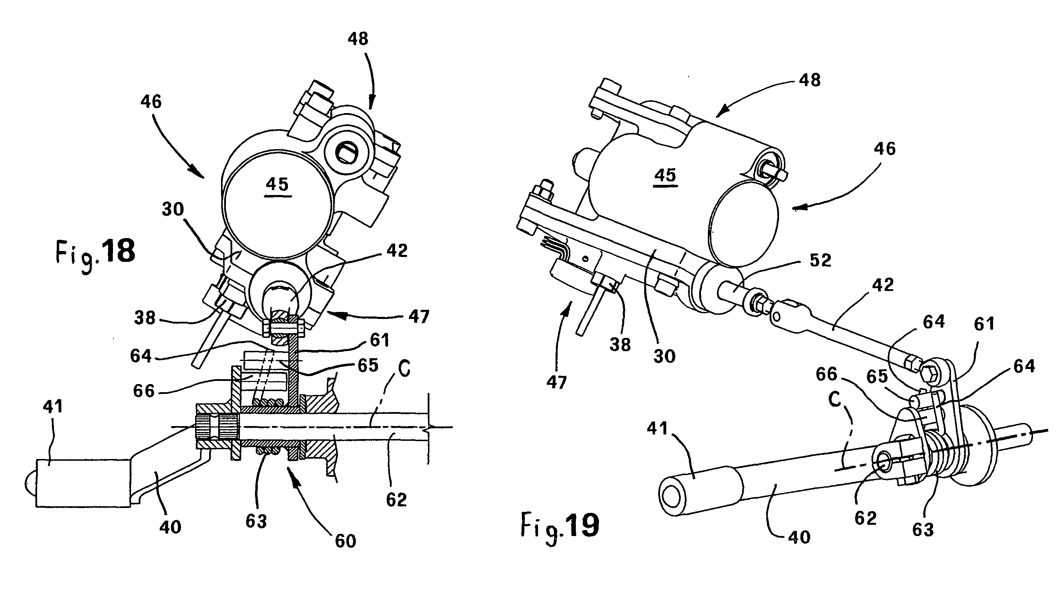

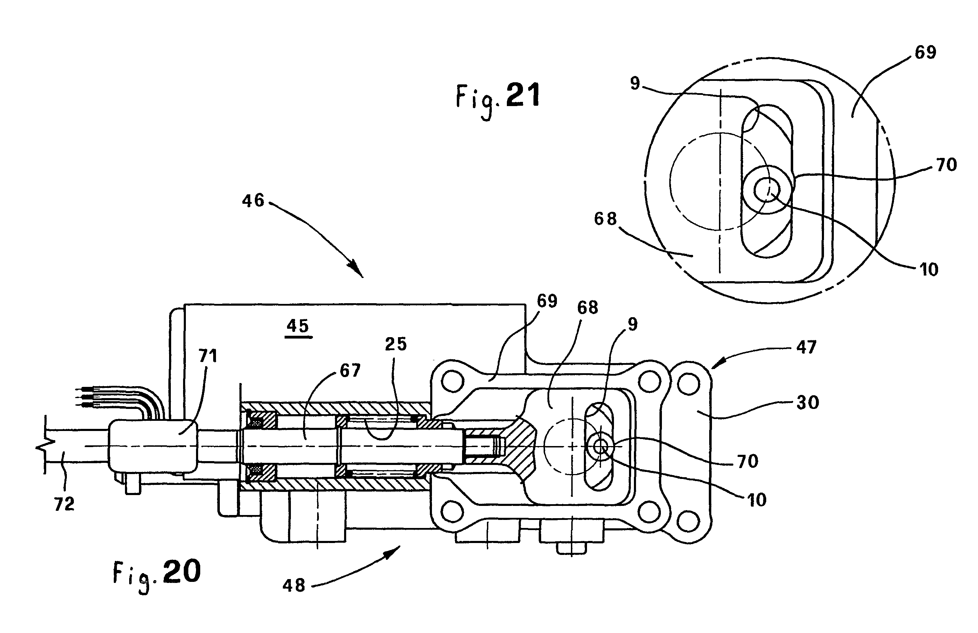

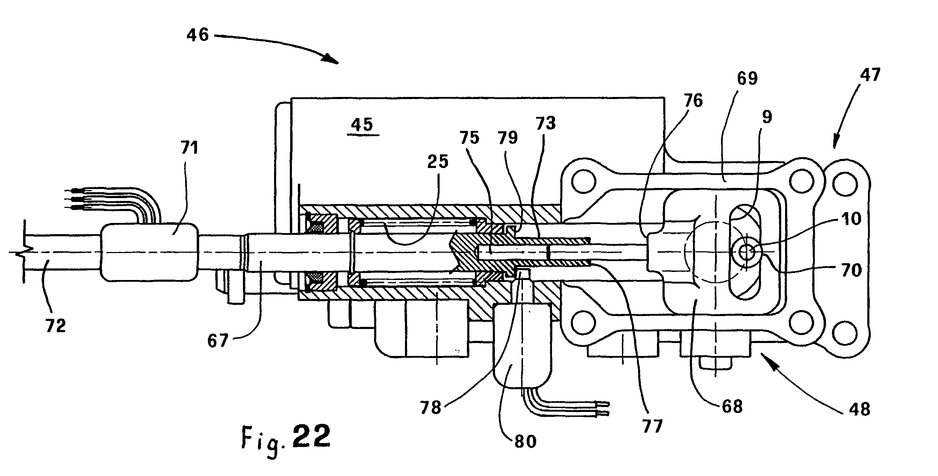

Some embodiments of the invention are illustrated, purely by way of example, in the twelve tables of drawings attached in which Figure 1 is the longitudinal section of the hydraulically operated clutch control actuator with template, as described in the present invention; Figure 2 is a perspective view, with the cover missing from the template, of the actuator of Figure 1; Figures 3 to 8 are schematic representations of the template and of the crank stud of a clutch actuator, in the various positions during the operating cycle, starting from disengagement to reengagement; Figure 9 is a diagram showing the forces that act on the template and its movement during a stroke; Figure 10 is the longitudinal section of a sequential gearbox control actuator with template operated by metal wire; Figure 11 is the longitudinal section of a sequential gearbox control actuator with template, according to the invention; Figure 12 is the prospective view, with the cover missing from the template, of the actuator in Figure 11; Figure 13 is the prospective view of the lever mechanism coupling the control of the sequential gearbox of a motorcycle with the actuator with template, according to the present invention; Figure 14 is the prospective view of the sequential gearbox and clutch control actuator for a motorcycle, both coupled to the same drive motor; Figure 15 is the lateral view of a further embodiment of the group of actuators for clutch/gearbox, viewed from the side of the gearbox actuator, without lateral cover and partially sectioned; Figure 16 is the prospective view of the mechanical axial disconnecting mechanism for the gearbox lever; Figure 17 is section XVII-XVII of Figure 15 limited to the sectioned plane; Figure 18 is a longitudinal prospective view of the group of actuators with a further embodiment of the mechanical disconnecting mechanism showed sectioned, in this case rotational and positioned directly on the pin of the sequential gearbox lever; Figure 19 is the prospective view of the group of actuators and lever mechanism of the gearbox operation in the previous Figure; Figure 20 is the side view of the group of actuators for clutch/gearbox viewed from the clutch actuator side, without the lateral cover and partially sectioned; Figure 21 is the enlarged view of the template and the crank stud of the clutch actuator of the previous Figure, slightly rotated from the neutral position with clutch engaged; Figure 22 is a view analogous to the previous one of the clutch actuator, but with locking tooth, with electromagnetic control, that keeps the clutch disengaged, pressed against the rigid control lever.

The figures show: 1, Figure 1, the hydraulic control mechanism of the clutch, having pump 2, with piston 3 of cylinder 4 and reservoir 5, connected to the pump by means of inlet tubes 6; 7, the connection of the supply tube for the hydraulic fluid to the clutch, here not shown; 8, the plate in which the template 9 is fashioned coupled to the crank stud 10 made to rotate on command by gear reducer 11; 12, the lever connected, by means of pin 13, to the said plate and in maintained contact with the said piston 3; 14, the guide of the said plate 8; 15, the reaction cup for the return stroke of the said piston 3, against the reaction of the compensating spring 16, adjustable so as to reduce the loads on the mechanism during operation of the clutch; 17, a sphere pushed by spring 18 to sit indent 19, so as to define fixed position of the said crank; 20, Figure 2, the position sensor of the clutch lever; CD, Figure 4, the initial displacement in the disengagement movement of the clutch and CI, Figure 8, the final stroke of the engagement movement; R, Figure 9, the point on the diagram indicating the neutral position of the mechanism illustrated in Figure 3; D, the point in the diagram indicating the initial stage of disengagement, illustrated in Figure 5; F, the point in the diagram indicating the complete disengagement, illustrated in Figure 6; I, the point in the diagram indicating the completed engagement, illustrated in Figure 7; G, the loading vector of the compensating spring from I to R, illustrated in Figure 8, or the unloading vector from R to D, illustrated in Figure 4; 21, Figure 10, a plate with template 9, analogous to the preceding one but shorter for operation with the metal cable 22 of the clutch control, not shown; 23, the connecting stem between the said plate 21 and the clamp 24, holding said cable 22; 25, the spring compensating the forces on the mechanism; 26, the sheath of the said metal cable.

The figures also show: 27, Figure 11, the control actuator of a sequential gearbox, in which the plate 28, with template 29, is made to slide in guide 30; the said template consists of two guiding profiles 31, each with axis tangential to the circumference followed by the said crank stud 10 and parallel to each other, as well as of other profiles 32, coaxial and tangential to the said circumference, in a perpendicular direction to profiles 31 and parallel to the guide 30; 33 the rod connecting control lever of the gearbox; the said rod is positioned by counter-acting springs 34, 35 in both directions, whereas it is elastically connected with pin 13 to the said plate 28 by means of the over-run compensation springs 36; S, the positioning hole for the sensor which detects the neutral position of the actuator 27, to detect manual interventions and to prevent the automatic intervention of the actuator; 37 the fulcrum of rear suspension of the actuator; 38, Figure 12, the sensor to detect the position of the control; 39, Figure 13, the extension of the said rod 33; 40, the pedal control, on axis C, determining the rotation of the sequential gearbox selector, not shown; 42, a rod connecting the said pedal control 40 to the rod 39; 43, an oscillation arm of the said rods .

The figures also show: 44, Figure 14, the group of two actuators 1 and 27, for the simultaneous control of the clutch, here hydraulically operated, and the sequential gearbox; 45, the single electric motor reducer that synchronously activates the pins that couple with the templates 9 and 29, to act simultaneously and with a single control, from the power assisted control mechanism, not shown; 46, Figure 15, the group of two actuators in compact form 47 for the sequential gearbox and 48 for the clutch; 49 the plate in which template 50 is fashioned, analogous to template 29, but having straight profiles 51 joining profiles 31-32 (and 32-31) following on from each other; 52, the rigid rod connected rigidly with pin 13 to the said plate 49 and subjected to the centring action of the springs 34 and 35; 53, the mechanical axial disconnecting device rigidly connected to the control lever 54 of the sequential gearbox control: the said disconnecting device consists of a double housing for the preloaded compression spring 55, in which the external part 56 is rigidly connected to the rod 57, that is an extension of rod 54, and the internal part 58 is rigidly connnected to the rod 54; 59, inclined portions of the said external part to contain and guide the said spring 55 preloaded to a fixed value; 60, Figure 18, the rotational disconnecting device, placed between the control lever 61, to which is connected rod 42, and the pin 62 for activating the sequential gearbox on axis C; 63, the rotational spring, between whose end portions 64, preloaded to a fixed value, are held pin 65, rigidly fixed to the said arm 61, and pin 66 rigidly fixed to the gearbox lever 40, splined on said pin 62: the lever is rotationally coupled to the said pin 62.

Finally, the figures also show: 67, Figure 20, the rigid rod rigidly connected to the sliding plate 68 in which there is template 9 for the crank stud 10; 69 the guide for the said sliding plate; 70, an indent for the precise definition of the angle of rotation of the stud 10 for the neutral position; 71 a load cell, to measure axial loads, positioned between the said rod 67 and the extension 72, to enable a fine adjustment of the moment of engagement of the clutch; 73, Figure 22, the extremity of the said rod 67, in which there is a rigid unidirectional coupling with the said sliding plate 68: the said connection consists of a rod 74 rigidly connected to the said plate 68 coupled with axial sliding in a corresponding groove 75 made in the rod 67: during the thrust motion, the shoulder 76 of the said plate 68 and the front surface 77 of the said extremity are in contact; 78, the locking tooth of the said rod 67, which presses against an axial shoulder 79 made in said extremity 73; 80, the electromagnet activating the said locking tooth 78, when in neutral position being disengaged.

Operation of the hydraulically operated clutch actuator is as follows. The actuator may be placed in any convenient location in the vehicle and has the hydraulic connection 7 with the tube to the actuator cylinder of the clutch, of known type, and the servo control acts with an electric signal to the motor reducer in the moment the clutch is operated. When the command is given the rotation of the crank stud 10 generated by the motor reducer is effected with a speed that rapidly enables the thrust on piston 3 to achieve a response from the clutch suitable to the operating conditions of the vehicle at that moment. The said stud rotating and pushing the template 9 towards the said piston generates the axial movement of the pump 2 that sends pressurised oil through connecting tube 7 to the clutch. In the last portion of rotation of the button 10 the return stroke of the plate 8 is counteracted by the thrust of spring 16 acting on the plate by means of cup 15, to counteract the forces generated by the springs in the clutch. Finally, sphere 17 entering into the groove 19 selects the neutral position of the said crank stud 10 in contact with the template 9. In this position the plate is only pushed by the spring 16, preloaded, whereas on the opposite side the forces of the clutch are balanced inside the clutch itself and by the hydraulic connection 6 between the cylinder 4 and the tank 5.

Comparing the operation of the actuator described above with the load-displacement diagram, the crank stud 10, Figure 9, once beyond the neutral position dead-point, Figure 3, there is a first section CD in which the stud 10 is propelled by the spring 16 without encountering resistance, due to the stroke required by connection 6 for hydraulic sealing: the motion occurs with the maximum acceleration that the inertia of the motor reducer mechanism allows, reaching close to point R; then in the section CD, still under the action of the spring which overcomes the counter forces generated in taking up the slack caused when disengaging the clutch, in the diagram the load passes along line G with a very small displacement from R to D. Subsequent displacement, from the position of Figure 4 to that of Figure 6 is represented from point D to F in the diagram with a variation in load, acting on the said stud 10, still under action of the spring 16 for the first half of displacement, and then only subsequently does the motor reducer have to overcome the forces to achieve complete disengagement of the clutch arriving at F: the load that has to be counteracted in normal known clutches has been found to be between 0 and 30 daN. In the subsequent phase of clutch engagement, from Figure 6 to Figure 8, the thrust of the clutch from F towards I aids rotation of the crank stud in the first part, then as described for the disengagement, the subsequent section it is of a reduced value due to the difference in the preloading of the springs of the clutch and the compensation spring 16; in the last section with displacement CI of Figure 8 the stud 10 has to overcome the entire force of the spring 16, passing from point I to point R along load vector G: this displacement occurs at the end of the cycle without affecting it, the load generated by the electric motor reducer may be controlled by the conformation of the thrust face of the template 9. The said template, in the case of a rectilinear or straight face, with respect to the direction of displacement of the plate 8, has a sinusoidal relationship of the reduction of the tangential load actually acting on the motor reducer, with respect to the load generated by the spring 16, thereby assisting in reaching the initial position in Figure 3. From the foregoing emerges the possibility of shaping the face of the template 9 on the side of the compensating spring 16, but also of 25 with the metal cable 22, to minimise the torque acting on the motor reducer in the above mentioned displacement CI: the resulting profile has an inclined section with variation of the inclination close to the neutral position. Finally, with this actuator, the profile of the template 9 can be made with a geometry that define displacement relationships for clutch disengagement and engagement that allow specific responses of the clutch to be achieved; this is possible with actuator 1, whether it rotates in one direction or whether it rotates in both directions, when coupled with the gearbox actuator 27.

In the subsequent configuration operation by metal cable 22, Figure 3, operation is analogous, with the difference of the pulling action, and not thrust, applied by the said cable, as shown in Figure 1; the neutral position of the said crank stud 10 is achieved with the play introduced between the extremity of the said cable 22 and the clamp 24 holding the said cable, positioned at the end of the stem 23: the compensation spring 25 has its maximum load in that position.

In this way, the shape of the template 9, as described earlier, may, advantageously have a non linear profile designed to achieve displacement relationships of the plate which vary in function of the positions of the crank stud 10, which may thereby conveniently be adjusted in function of the forces acting on the mechanism.

Operation of the sequential gearbox actuator, Figure 4, is as follows. The power assisted control that acts on the clutch, as described earlier, also acts as control for the sequential gearbox actuator: as the crank stud 10 rotates it engages with one of the two profiles 31 and acting on plate 28 displaces it, the choice of profile depends on the direction of gear selection, either a higher gear or a lower one, and therefore on the sense of rotation of the stud 10; the pin 13, is in turn pushed by plate 28 under the action of the compensation spring 36, so as to act on the rod 33 connected with rods 40 and lever pedal 41. The control stroke of the gearbox is shorter than stroke of the said plate 28, the compensation of the springs 36 ensuring the gearbox stroke is completed, ensuring proper operation.

The engagement with the guiding profiles 31 of plate 28 is advantageously set after at least a quarter of a rotation of the stud 10 to enable the motor reducer to start in total absence of resistance and, furthermore, to engage with profile 31 with tangential motion so as to avoid shocks; the delay in the activation is also advantageous in its use in conjunction with the clutch actuator, allowing the clutch actuator to intervene before the gearbox actuator. Furthermore the two profiles 32 enable the operator to use the sequential gearbox manually, without the intervention of the power assisted control and the actuator: the stud 10 can remain in its neutral position, shown in Figure 4, while the plate 28, moved by the external lever system, pedal 41, lever 40, rod 42 and rod of extension 39, does not encounter obstructions during its stroke, thereby allowing manual operation. Moreover, the configuration of the template 50, with its straight profiles 51, makes it easy to operate in all conditions, enabling even a manual change by the driver while the actuator 47 is operating; a further safety feature is the mechanical disconnecting mechanism, in both its axial configuration 53 and its rotational configuration 60, ensuring a rigid connection between the parts with limited levels of load, in the case of the axial disconnecting mechanism, or limited torque in the case of the rotational disconnecting mechanism. The effect of the disconnecting mechanisms is to allow over-run of the actuator 47 without damaging the sequential gearbox whilst at the same time ensuring that control stroke is completed.

Operation of the double actuator 1, 27, Figure 7, is as in the respective single actuators for the clutch and the sequential gearbox: the coupling of the two respective studs 10 is made conveniently with the required phase angle of one with respect to the other, whereas for the sense of rotation of the motor reducer 45, whilst being indifferent for the clutch control, is not indifferent for the sequential gearbox. The coupling of the two crank studs 10 and their respective plates 8 or 21, and 28 is in any way possible and very convenient, with the two actuators performing a simultaneous and synchronised control stroke using a single driving device. Consequently a lack of synchronisation between the gearbox and the clutch is always avoided.

The clutch actuator 48, as shown in Figures 20 and 22, has a rigid control rod 67, and its extension 72, separated by load cell 71 which continuously measures the value of the load applied between the actuator 48 and the clutch, here not shown. The resulting signal is analysed by the electronic processor which controls the phase modulation of engagement of the said clutch. An analogous effect of phase modulation of the clutch engagement may also be obtained in the hydraulic control of the clutch as in Figures 1 and 2, having in the control tube, that is, downstream of the pump 2 and upstream of the cylinder activating the said clutch, a sensor for measuring the pressure of the hydraulic liquid, which is, as known, proportional to the load on the rod of the clutch.
Figures 20 and 21 show the indent 70, a variation of indent 19, in which the crank stud 10 engages when in its neutral position with clutch engaged allowing a precise positioning of the actuator 48, by way of the compensating action of the spring 25 on the sliding plate 68 with template 9.

Operation of the locking tooth 78, shown in Figure 22, is achieved by activating the controlling electromagnet 80 causing the said tooth to engage with the axial shoulder 79 of the extremity 73 of the rod 67: the said shoulder allows the thrust stroke, but does not allow the reengagement of the clutch thereby enabling the actuator to perform a number of consecutive rotations of the stud 10 without operating the clutch; this possibility is very useful when carrying out more the one gear changes, usually when changing down, enabling the clutch engagement phase to be skipped when changing several gears simultaneously; Once the multiple gear change phase is completed the electronic control processor deactivates the electromagnet, thus enabling the final engagement stroke of the clutch to be carried out.

In practice the materials, the dimensions and details of execution may be different from, but technically equivalent to, those described without departing from the juridical domain of present invention.
For instance, though less advantageous, instead of the said linear templates, that is, generating a sinusoidal displacement relationship, thrust crank mechanisms may be used, which in function of the length of the piston rod used approach the said sinusoidal relationship. Furthermore, as an alternative to rod 39 in the gearbox actuator 27 the actuation may be transmitted by means of metal cables. Also, the straight profiles 51 may be in whichever way profiled or curved to join said profiles 31-32 (and 32-31) following on from each other. Finally the axial shoulder 79, in the case of the locking tooth 78 for keeping the clutch actuator 48 in the open position may be obtained with an annular hole, or even an axial slot, in the said extremity 73, with an appropriate axial extension to enable an adequate movement in the said slot to compensate the displacement of the rod 67 in the over-runs generated by the sliding plate 68.

## Claims

1. An electric actuator for controlling the sequential gearbox in motor vehicles, comprising an electric motor (11) and a mechanism (31, 32) for transforming the rotary motion into linear motion of the actuator element (33, 52), **characterised in that**, it comprises: axial actuator means (29, 50) set directly on the translation axis of said actuator element; said means have a prevalent normal development to said translation axis; said means allow multiple consecutive gear selections on each direction of roto-translation, either a higher gear or a lower one; said means after each operation, also consecutive, returning to the starting position, for internal and/or external action to the controlled element or to the actuator itself, with the possible aid of elastic means (34, 35) acting on the axis to said actuator element; said actuator means allowing, indifferently, the manual or automatic controlling said sequential gearbox; the mechanism, for transforming the rotary motion into linear motion, is a template (29, 50), fashioned in a plate (28, 49) sliding on a corresponding guide (30), in which is positioned a crank stud (10) made to rotate by the said electric motor.

2. An electric actuator for controlling the sequential gearbox in motor vehicles, as claimed in the previous claim 1, **characterised in that**, it has the template (29, 50) with unilateral contact between said crank stud (10) and one of the sides of the profile (31) having prevalent vertical development of said template: the action acts to the reaction side to the motion of said crank stud and for the presence of elastic means (34, 35), axially to the actuator element, the position of start/stop is not related to each speed engaged.

3. An electric actuator for controlling the sequential gearbox in motor vehicles, as claimed in one of the previous claims 1 or 2, **characterised in that** the gearbox rod (33) is centred mechanically on the guide (30) of the actuator by means of counter-acting springs (34, 35) to constitute said elastic means axially to the actuator element.

4. An electric actuator for controlling the sequential gearbox in motor vehicles, as claimed in one of the previous claims 1, 2 or 3, **characterised in that** the template (29, 50) consists of two profiles (31) which are each parallel and tangential to the circumference traced by the stud (10), and of two profiles (32) which are coaxial and tangential to the said circumference in a direction parallel to that of the guide (30) and perpendicular to the said parallel profiles (31).

5. An electric actuator for controlling the sequential gearbox in motor vehicles, as claimed in the previous claim 4, **characterised in that**, the said template (50) has connecting profiles (51) between the said parallel profiles (31) and coaxial profiles (32) when they follow on from each other.

6. An electric actuator for controlling the sequential gearbox in motor vehicles, as claimed in one of the previous claims from 1 to 5, **characterised in that** it has a mechanical disconnecting mechanism (53, 60), with preloaded elastic element (55, 63), positioned between the said electric actuator (47) and the control pin (62, C) of the sequential gearbox.

7. An electric actuator for controlling the sequential gearbox in motor vehicles, as claimed in the previous claim 6, **characterised in that** the said disconnecting mechanism (53) has an axial operating direction and is positioned directly on the control lever (54, 57) of the sequential gearbox.

8. An electric actuator for controlling the sequential gearbox in motor vehicles, as claimed in the previous claim 6, **characterised in that** the said disconnecting mechanism (60) intervenes directly on the rotation of the pin (62, C) of the sequential gearbox controlled by rod (42) of the said electric actuator (47) of the gearbox.

9. An electric actuator for controlling the sequential gearbox in motor vehicles, as claimed in the previous claim 7, **characterised in that** the said axial mechanical disconnecting mechanism (53) consists of a preloaded helical spring (55), positioned in a seat whose internal part (58) is rigidly connected to the control rod (54) of the gearbox, whereas the external part (56) is rigidly connected to the section of rod (57) which is the extension of the preceding one.

10. An electric actuator for controlling the sequential gearbox in motor vehicles, as claimed in the previous claim 8, **characterised in that** the said rotational mechanical disconnecting mechanism (60) is positioned on the axis of the said control pin (62), having a rotational spring wound on said pin and the spring end portions (64) preloaded to hold the pins, one (65) rigidly fixed to arm (61), and the other (66) rigidly fixed to the pedal (40), in turn splined on said control pin of the sequential gearbox.

11. An electric actuator for controlling the sequential gearbox in motor vehicles, as claimed in one of the previous claims from 1 to 10, **characterised in that** the actuator element (33) is connected to the plate (29) containing the template (29) in an elastic manner (36) so as to allow over-run of the control stroke.

12. An electric actuator for controlling the sequential gearbox in motor vehicles, as claimed in one of the previous claims, **characterised in that** it has a sensor (S) for detecting the neutral position of the template (29, 50) of the actuator.

13. An electric actuator for controlling the clutch in motor vehicles, comprising an electric motor (11) and a mechanism (9, 10) for transforming the rotary motion into linear motion of the actuator element (2, 22, 67), **characterised in that**, it comprises: axial actuator means (9, 10) set directly on the translation axis of said actuator element; said means have a prevalent normal development to said translation axis; said means allow multiple consecutive operations on each direction of roto-translation; said means after each operation, also consecutive, returning to the starting position, for internal and/or external action to the controlled element or to the actuator itself, with the possible aid of elastic means (16, 25) acting on the axis to said actuator element; the mechanism, for transforming the rotary motion into linear motion, is a template (9), fashioned in a plate (8, 21, 68) sliding on a corresponding guide (14, 69), in which is positioned a crank stud (10) made to rotate by the said electric motor.

14. An electric actuator for controlling the clutch in motor vehicles, as claimed in the previous claim 13, **characterised in that**, the said template (9) being shaped with bilateral contact in the operation stroke with the said crank stud (10): all two sides of template are interested to the action of the said crank.

15. An electric actuator for controlling the clutch in motor vehicles, as claimed in one of the previous claims 13 or 14, **characterised in that**, it presents elastic means for energy accumulation (16, 25) placed axially to the actuator element, to compensate the forces generated by the internal springs of the clutch.

16. An electric actuator for controlling the clutch in motor vehicles, as claimed in the previous claim 15, **characterised in that**, it presents said elastic means for energy accumulation consisting of a compensation spring (16, 25), to compensate the forces generated by the internal springs of the clutch.

17. An electric actuator for controlling the clutch in motor vehicles, as claimed in one of the previous claims from 13 to 16, **characterised in that**, it has the actuator element consisting of a hydraulic pump (2) connected to the plate (8) containing the said actuator means.

18. An electric actuator for controlling the clutch in motor vehicles, as claimed in one of the previous claims 13 to 16, **characterised in that**, it has a unidirectional rigid connection (76, 77) between the sliding plate (68) with the template (9) and the rigid rod (67, 73), to control the clutch: having also a locking tooth (78) of the said rod or extremity (67, 73) to abut against the shoulder (79) or in the slot made in it: the said tooth is controlled by means of an electromagnet (80) and its neutral position disengaged.

19. An electric actuator for controlling the clutch in motor vehicles, as claimed in one of the previous claims from 13 to 16, **characterised in that**, the actuator element consists of a metallic cable (22) connected to the said plate (21) containing the said actuator means.

20. An electric actuator for controlling the clutch and the sequential gearbox of motor vehicles, **characterised in that** it has the actuator for the clutch according to one of the claims from 13 to 19 and the actuator for the gearbox according to one of the preceding claims from 1 to 12: both actuators being driven by the same electric motor (45).

21. Set for modifying the control clutch and the sequential gearbox of a motorcycle, comprising at least one electric actuator for controlling the clutch according to one of the preceding claims from 13 to 20, and an actuator for controlling the sequential gearbox according to one of the preceding claims from 1 to 12 and 20.

## Patentansprüche

1. Elektrischer Aktor zum Regeln des sequentiellen Getriebes in Kraftfahrzeugen, umfassend einen Elektromotor (11) und einen Mechanismus (31, 32) zum Umwandeln der Drehbewegung in eine lineare Bewegung des Aktorenelements (33, 52), **dadurch gekennzeichnet, dass** er folgendes umfasst: axiale Aktorenmittel (29, 50), die direkt auf der Übersetzungsachse des Aktorenelements angeordnet sind; die Mittel weisen eine übliche, normale Ausbildung bezüglich der Übersetzungsachse auf; die Mittel ermöglichen mehrere aufeinanderfolgende Gangauswahlen in jeder Dreh-Übersetzungsrichtung, entweder einen höheren Gang oder einen niedrigeren; wobei die Mittel nach jedem, auch aufeinanderfolgenden, Betrieb zum internen und/oder externen Einwirken zu dem betätigten Element oder dem Aktor selbst mit der möglichen Hilfe von elastischen Mitteln (34, 35), die auf die Achse des Aktorenelements einwirken, in die Ausgangsstellung zurückkehren; wobei die Aktorenmittel indifferent das manuelle oder automatische Regeln des sequentiellen Getriebes ermöglichen; der Mechanismus zum Umwandeln der Drehbewegung in eine lineare Bewegung ist eine Schablone (29, 50), die zu einer Platte (28, 49) gestaltet ist, die auf einer entsprechenden Führung (30) gleitet, in der ein Kurbelbolzen (10) so angeordnet ist, dass er durch den Elektromotor gedreht wird.

2. Elektrischer Aktor zum Regeln des sequentiellen Getriebes in Kraftfahrzeugen, wie in dem vorhergehenden Anspruch 1 beansprucht, **dadurch gekennzeichnet, dass** er die Schablone (29, 50) mit unilateralem Kontakt zwischen dem Kurbelbolzen (10) und einer der Seiten der Kontur (31) mit üblicher vertikaler Ausbildung der Schablone aufweist: die Wirkung erfolgt auf die Reaktionsseite zur Bewegung des Kurbelbolzens und wegen des Vorhandenseins von elastischen Mitteln (34, 35), und zwar axial zu dem Aktorenelement, die Start/Stopp-Stellung ist nicht auf jede eingerückte Geschwindigkeit bezogen.

3. Elektrischer Aktor zum Regeln des sequentiellen Getriebes in Kraftfahrzeugen, wie in einem der vorhergehenden Ansprüche 1 oder 2 beansprucht, **dadurch gekennzeichnet, dass** die Getriebestange (33) mechanisch auf der Führung (30) des Aktors mittels in entgegengesetzter Richtung wirkender Federn (34, 35) zentriert ist, um die elastischen, axial zum Aktorenelement angeordneten Mittel zu bilden.

4. Elektrischer Aktor zum Regeln des sequentiellen Getriebes in Kraftfahrzeugen, wie in einem der vorhergehenden Ansprüche 1, 2 oder 3 beansprucht, **dadurch gekennzeichnet, dass** die Schablone (29, 50) aus zwei Konturen (31), die jeweils parallel und tangential zum durch den Kurbelbolzen (10) nachgezogenen Umfang angeordnet sind, sowie aus zwei Konturen (32) besteht, die koaxial und tangential zum Umfang in einer Richtung parallel zur Führung (30) und senkrecht zu den parallelen Konturen (31) sind.

5. Elektrischer Aktor zum Regeln des sequentiellen Getriebes in Kraftfahrzeugen, wie im vorhergehenden Anspruch 4 beansprucht, **dadurch gekennzeichnet, dass** die Schablone (50) verbindende Konturen (51) zwischen den parallelen Konturen (31) und den koaxialen Konturen (32) aufweist, wenn sie voneinander weiterwandern.

6. Elektrischer Aktor zum Regeln des sequentiellen Getriebes in Kraftfahrzeugen, wie in einem der vorhergehenden Ansprüche 1 bis 5 beansprucht, **dadurch gekennzeichnet, dass** er einen mechanischen Trennmechanismus (53, 60) mit vorgespanntem elastischem Element (55, 63) aufweist, der zwischen dem elektrischen Aktor (47) und dem Steuerstift (62, C) des sequentiellen Getriebes angeordnet ist.

7. Elektrischer Aktor zum Regeln des sequentiellen Getriebes in Kraftfahrzeugen, wie im vorhergehenden Anspruch 6 beansprucht, **dadurch gekennzeichnet, dass** der Trennmechanismus (53) eine axiale Betriebsrichtung hat und direkt auf dem Schalthebel (54, 57) des sequentiellen Getriebes angeordnet ist.

8. Elektrischer Aktor zum Regeln des sequentiellen Getriebes in Kraftfahrzeugen, wie im vorhergehenden Anspruch 6 beansprucht, **dadurch gekennzeichnet, dass** der Trennmechanismus (60) direkt auf die Drehung des Stifts (62, C) des sequentiellen Getriebes einwirkt, geregelt durch die Stange (42) des elektrischen Aktors (47) des Getriebes.

9. Elektrischer Aktor zum Regeln des sequentiellen Getriebes in Kraftfahrzeugen, wie im vorhergehenden Anspruch 7 beansprucht, **dadurch gekennzeichnet, dass** der axiale mechanische Trennmechanismus (53) aus einer vorgespannten Schraubenfeder (55) besteht, die in einem Sitz angeordnet ist, dessen Innenteil (58) starr mit der Steuerstange (54) des Getriebes verbunden ist, während der Außenteil (56) starr mit dem Abschnitt der Stange (57) verbunden ist, der die Verlängerung der vorangehenden darstellt.

10. Elektrischer Aktor zum Regeln des sequentiellen Getriebes in Kraftfahrzeugen, wie im vorhergehenden Anspruch 8 beansprucht, **dadurch gekennzeichnet, dass** der sich drehende mechanische Trennmechanismus (60) auf der Achse des Steuerstifts (62) angeordnet ist und eine Drehfeder aufweist, die auf den Stift und die Federendabschnitte (64), die vorgespannt sind, um die Stifte zu halten, gewickelt ist, wobei einer (65) starr mit dem Arm (61) verbunden ist und der andere (66) starr mit dem Pedal (40) verbunden ist, das wiederum auf dem Steuerstift des sequentiellen Getriebes keilverzahnt ist.

11. Elektrischer Aktor zum Regeln des sequentiellen Getriebes in Kraftfahrzeugen, wie in einem der vorhergehenden Ansprüche 1 bis 10 beansprucht, **dadurch gekennzeichnet, dass** das Aktorenelement (33) mit der Platte (29) verbunden ist, die die Schablone (29) elastisch (36) enthält, um so ein Auflaufen des Schalttakts zu ermöglichen.

12. Elektrischer Aktor zum Regeln des sequentiellen Getriebes in Kraftfahrzeugen, wie in einem der vorhergehenden Ansprüche beansprucht, **dadurch gekennzeichnet, dass** er einen Sensor (S) zum Detektieren der neutralen Stellung der Schablone (29, 50) des Aktors aufweist.

13. Elektrischer Aktor zum Regeln der Kupplung in Kraftfahrzeugen, umfassend einen Elektromotor (11) und einen Mechanismus (9, 10) zum Umwandeln der Drehbewegung in eine lineare Bewegung des Aktorenelements (2, 22, 67), **dadurch gekennzeichnet, dass** er folgendes umfasst: axiale Aktorenmittel (9, 10), die direkt auf der Übersetzungsachse des Aktorenelements angeordnet sind; die Mittel weisen eine übliche, normale Ausbildung bezüglich der Übersetzungsachse auf; die Mittel ermöglichen mehrere aufeinanderfolgende Gangauswahlen in jeder Dreh-Übersetzungsrichtung; wobei die Mittel nach jedem, auch aufeinanderfolgenden, Betrieb zum internen und/oder externen Einwirken zu dem betätigten Element oder dem Aktor selbst mit der möglichen Hilfe von elastischen Mitteln (16, 25), die auf die Achse des Aktorenelements einwirken, in die Ausgangsstellung zurückkehren; der Mechanismus zum Umwandeln der Drehbewegung in eine lineare Bewegung ist eine Schablone (9), die zu einer Platte (8, 21, 68) gestaltet ist, die auf einer entsprechenden Führung (14, 69) gleitet, in der ein Kurbelbolzen (10) so angeordnet ist, dass er durch den Elektromotor gedreht wird.

14. Elektrischer Aktor zum Regeln der Kupplung in Kraftfahrzeugen, wie in dem vorhergehenden Anspruch 13 beansprucht, **dadurch gekennzeichnet, dass** die Schablone (9) mit bilateralem Kontakt in dem Betriebshub mit dem Kurbelbolzen (10) ausgebildet ist: für die beiden Seiten der Schablone ist die Wirkung des Kurbelbolzens von Interesse.

15. Elektrischer Aktor zum Regeln der Kupplung in Kraftfahrzeugen, wie in einem der vorhergehenden Ansprüche 13 oder 14 beansprucht, **dadurch gekennzeichnet, dass** er elastische Mittel zur Energieansammlung (16, 25) umfasst, die axial zu dem Aktorenelement angeordnet sind, um die Kräfte, die durch die internen Federn der Kupplung erzeugt werden, zu kompensieren.

16. Elektrischer Aktor zum Regeln der Kupplung in Kraftfahrzeugen, wie in dem vorhergehenden Anspruch 15 beansprucht, **dadurch gekennzeichnet, dass** er die elastischen Mittel zur Energieansammlung umfasst, die aus einer Ausgleichsfeder (16, 25) bestehen, um die Kräfte, die durch die internen Federn der Kupplung erzeugt werden, zu kompensieren.

17. Elektrischer Aktor zum Regeln der Kupplung in Kraftfahrzeugen, wie in einem der vorhergehenden Ansprüche 13 bis 16 beansprucht, **dadurch gekennzeichnet, dass** er das Aktorenelement aufweist, das aus einer Hydraulikpumpe (2) besteht, die mit der die Aktorenmittel enthaltenden Platte (8) verbunden ist.

18. Elektrischer Aktor zum Regeln der Kupplung in Kraftfahrzeugen, wie in einem der vorhergehenden Ansprüche 13 bis 16 beansprucht, **dadurch gekennzeichnet, dass** er eine unidirektionale starre Verbindung (76, 77) zwischen der Gleitplatte (68) mit der Schablone (9) und der starren Stange (67, 73) aufweist, um die Kupplung zu regeln: des weiteren einen Verriegelungszahn (78) der Stange oder des Endes (67, 73) zur Anlage an die Schulter (79) oder in dem darin vorgesehenen Schlitz: der Zahn wird mittels eines Elektromagneten (80) und seiner ausgerückten Leerlaufstellung geregelt.

19. Elektrischer Aktor zum Regeln der Kupplung in Kraftfahrzeugen, wie in einem der vorhergehenden Ansprüche 13 bis 16 beansprucht, **dadurch gekennzeichnet, dass** das Aktorenelement aus einem Metallkabel (22) besteht, das mit der Platte (21) verbunden ist, die die Aktorenmittel enthält.

20. Elektrischer Aktor zum Regeln der Kupplung und des sequentiellen Getriebes von Kraftfahrzeugen, **dadurch gekennzeichnet, dass** er den Aktor für die Kupplung nach einem der Ansprüche 13 bis 19 und den Aktor für das Getriebe nach einem der vorhergehenden Ansprüche 1 bis 12 aufweist: wobei beide Aktoren durch denselben Elektromotor (45) angetrieben werden.

21. Satz zum Modifizieren der Regelkupplung und des sequentiellen Getriebes eines Motorrads, umfassend mindestens einen elektrischen Aktor zum Regeln der Kupplung nach einem der vorhergehenden Ansprüche 13 bis 20 und einen Aktor zum Regeln des sequentiellen Getriebes nach einem der vorhergehenden Ansprüche 1 bis 12 und 20.

## Revendications

1. Actionneur électrique permettant de commander la boîte de vitesses séquentielle dans les véhicules à moteur, comprenant un moteur électrique (11) et un mécanisme (31, 32) permettant de transformer le mouvement rotatif en un mouvement linéaire de l'élément d'actionneur (33, 52), **caractérisé en ce qu'**il comprend : un moyen formant actionneur axial (29, 50) placé directement sur l'axe de translation dudit élément d'actionneur ; ledit moyen présente un développement normal prévalent par rapport audit axe de translation ; ledit moyen permet des sélections multiples consécutives des vitesses dans chaque direction de la roto-translation, soit une vitesse supérieure, soit une vitesse inférieure ; ledit moyen après chaque opération, également consécutive, retournant dans la position de départ, pour une action interne et/ou externe sur l'élément commandé ou sur l'actionneur lui-même, avec l'aide possible de moyens élastiques (34, 35) agissant sur l'axe dudit élément d'actionneur ; ledit moyen d'actionneur permettant, indifféremment, la commande manuelle ou automatique de ladite boîte de vitesses séquentielle ; le mécanisme, permettant de transformer le mouvement de rotation en un mouvement linéaire, est un gabarit (29, 50), ayant la forme d'une plaque (28, 49) coulissant sur un guide correspondant (30), dans lequel un goujon de bielle (10) est positionné et est mis en rotation par ledit moteur électrique.

2. Actionneur électrique permettant de commander la boîte de vitesses séquentielle dans les véhicules à moteur, selon la revendication 1 précédente, **caractérisé en ce que** le gabarit (29, 50) présente un contact unilatéral entre ledit goujon de bielle (10) et l'un des côtés du profilé (31) présentant un développement vertical prévalent dudit gabarit ; l'action agit sur le côté réaction par rapport au mouvement dudit goujon de bielle et pour assurer la présence des moyens élastiques (34, 35), axialement par rapport à l'élément d'actionneur, la position de démarrage/d'arrêt n'étant pas liée à chaque vitesse engagée.

3. Actionneur électrique permettant de commander la boîte de vitesses séquentielle dans les véhicules à moteur, selon les revendications 1 ou 2 précédentes, **caractérisé en ce que** la tige de la boîte de vitesses (33) est centrée mécaniquement sur le guide (30) de l'actionneur au moyen de ressorts de contre-réaction (34, 35) afin de constituer lesdits moyens élastiques axialement par rapport à l'élément d'actionneur.

4. Actionneur électrique permettant de commander la boîte de vitesses séquentielle dans les véhicules à moteur, selon les revendications 1, 2 ou 3 précédentes, **caractérisé en ce que** le gabarit (29, 50) consiste en deux profilés (31) qui sont, chacun, parallèles et tangentiels à la circonférence tracée par le goujon (10), et en deux profilés (32) qui sont coaxiaux et tangentiels à ladite circonférence dans une direction parallèle à celle du guide (30) et perpendiculaire aux dits profilés parallèles (31).

5. Actionneur électrique permettant de commander la boîte de vitesses séquentielle dans les véhicules à moteur, selon la revendication 4 précédente, **caractérisé en ce que**, ledit gabarit (50) présente des profilés de couplage (51) entre lesdits profilés parallèles (31) et les profilés coaxiaux (32) lorsqu'ils se suivent les uns les autres.

6. Actionneur électrique permettant de commander la boîte de vitesses séquentielle dans les véhicules à moteur, selon les revendications 1 à 5 précédentes, **caractérisé en ce qu'**il présente un mécanisme de découplage mécanique (53, 60), muni d'un élément élastique préchargé (55, 63), positionné entre ledit actionneur électrique (47) et la goupille de commande (62, C) de la boîte de vitesses séquentielle.

7. Actionneur électrique permettant de commander la boîte de vitesses séquentielle dans les véhicules à moteur, selon la revendication 6 précédente, **caractérisé en ce que** ledit mécanisme de découplage (53) présente une direction axiale de fonctionnement et est positionné directement sur le levier de commande (54, 57) de la boîte de vitesses séquentielle.

8. Actionneur électrique permettant de commander la boîte de vitesses séquentielle dans les véhicules à moteur, selon la revendication 6 précédente, **caractérisé en ce que** ledit mécanisme de découplage (60) intervient directement sur la rotation de la goupille (60) de la boîte de vitesses séquentielle commandée par la tige (42) dudit actionneur électrique (47) de la boîte de vitesses.

9. Actionneur électrique permettant de commander la boîte de vitesses séquentielle dans les véhicules à moteur, selon la revendication 7 précédente, **caractérisé en ce que** ledit mécanisme de découplage mécanique axial (53) consiste en un ressort hélicoïdal préchargé (55), positionné dans un siège dont la partie interne (58) est couplée de manière rigide à la tige de commande (54) de la boîte de vitesses, tandis que la partie externe (56) est couplée de manière rigide à la section de tige (57) qui est l'extension de la précédente.

10. Actionneur électrique permettant de commander la boîte de vitesses séquentielle dans les véhicules à moteur, selon la revendication 8 précédente, **caractérisé en ce que** ledit mécanisme de découplage mécanique de rotation (60) est positionné sur l'axe de ladite goupille de commande (62), et présente un ressort de rotation enroulé sur ladite goupille et les parties d'extrémité du ressort (64) étant préchargées pour maintenir les goupilles, l'une (65) fixée, de manière rigide au bras (61), et l'autre (66) fixée de manière rigide à la pédale (40), raccordée par une cannelure, à son tour, sur ladite goupille de commande de la boîte de vitesses séquentielle.

11. Actionneur électrique permettant de commander la boîte de vitesses séquentielle dans les véhicules à moteur, selon les revendications 1 à 10 précédentes, **caractérisé en ce que** l'élément d'actionneur (33) est couplé à la plaque (29) contenant le gabarit (29) de manière élastique (36) de façon à permettre l'inertie de la course de commande.

12. Actionneur électrique permettant de commander la boîte de vitesses séquentielle dans les véhicules à moteur, selon l'une des revendications précédentes, **caractérisé en ce qu'**il présente un détecteur (S) permettant de détecter la position "point mort" du gabarit (29, 50) de l'actionneur.

13. Actionneur électrique permettant de commander l'embrayage dans les véhicules à moteur, comprenant un moteur électrique (11) et un mécanisme (9, 10) permettant de transformer le mouvement rotatif en un mouvement linéaire de l'élément d'actionneur (2, 22, 67), **caractérisé en ce qu'**il comprend : le moyen formant actionneur axial (9, 10) placé directement sur l'axe de translation dudit élément d'actionneur ; ledit moyen présente un développement normal prévalent par rapport audit axe de translation ; ledit moyen permet des opérations multiples consécutives dans chaque direction de la roto-translation ; ledit moyen, après chaque opération, également consécutive, retournant dans la position de départ, pour une action interne et/ou externe sur l'élément commandé ou sur l'actionneur lui-même, avec l'aide possible de moyens élastiques (16, 25) agissant sur l'axe dudit élément d'actionneur ; le mécanisme, permettant de transformer le mouvement de rotation en un mouvement linéaire, est un gabarit (9), ayant la forme d'une plaque (8, 21, 68) coulissant sur un guide correspondant (14, 69), dans lequel un goujon de bielle (10) est positionné et est mis en rotation par ledit moteur électrique.

14. Actionneur électrique permettant de commander l'embrayage dans les véhicules à moteur, selon la revendication 13 précédente, **caractérisé en ce que** ledit gabarit (9) a la forme d'un contact bilatéral dans la course de fonctionnement avec ledit goujon de bielle (10) : les deux côtés du gabarit sont concernés par l'action de ladite bielle.

15. Actionneur électrique permettant de commander l'embrayage dans les véhicules à moteur, selon l'une des revendications 13 ou 14 précédentes, **caractérisé en ce qu'**il présente des moyens élastiques pour l'accumulation d'énergie (16, 25), placés axialement par rapport à l'élément d'actionneur, afin de compenser les forces générées par les ressorts internes de l'embrayage.

16. Actionneur électrique permettant de commander l'embrayage dans les véhicules à moteur, selon la revendication 15 précédente, **caractérisé en ce qu'**il présente lesdits moyens élastiques pour l'accumulation d'énergie consistant en un ressort de compensation (16, 25), afin de compenser les forces générées par les ressorts internes de l'embrayage.

17. Actionneur électrique permettant de commander l'embrayage dans les véhicules à moteur, selon l'une des revendications 13 à 16 précédentes, **caractérisé en ce qu'**il présente l'élément d'actionneur consistant en une pompe hydraulique (2) couplée à la plaque (8) contenant ledit moyen formant actionneur.

18. Actionneur électrique permettant de commander l'embrayage dans les véhicules à moteur, selon l'une des revendications 13 à 16 précédentes, **caractérisé en ce qu'**il présente un couplage rigide unidirectionnel (76, 77) entre la plaque coulissante (68) portant le gabarit (9) et la tige rigide (67, 73), afin de commander l'embrayage : et **en ce qu'**il a également une dent de blocage (78) de ladite tige ou de son extrémité (67, 73) afin de buter contre l'épaulement (79) ou dans la fente prévue dans celui-ci et **en ce que** ladite dent est commandée par un électroaimant (80) et que sa position "point mort" est dégagée.

19. Actionneur électrique permettant de commander l'embrayage dans les véhicules à moteur, selon l'une des revendications 13 à 16 précédentes, **caractérisé en ce que** l'élément d'actionneur consiste en un câble métallique (22) couplé à ladite plaque (21) contenant ledit moyen formant actionneur.

20. Actionneur électrique permettant de commander l'embrayage et la boîte de vitesses séquentielle dans les véhicules à moteur, **caractérisé en ce qu'**il présente l'actionneur pour l'embrayage selon l'une des revendications 13 à 19 précédentes et l'actionneur pour la boîte de vitesse selon l'une des revendications 1 à 12 précédentes, les deux actionneurs étant entraînés par le même moteur électrique (45).

21. Ensemble permettant de modifier l'embrayage de commande et la boîte de vitesses séquentielle d'une motocyclette, comprenant au moins un actionneur électrique permettant de commander l'embrayage selon l'une des revendications 13 à 20 précédentes, et un actionneur permettant de commander la boîte de vitesses séquentielle selon l'une des revendications 1 à 12 et 20 précédentes.
